# EUROPÄISCHE PATENTSCHRIFT

(11) **EP 3 961 279 B1**
(45) Veröffentlichungstag und Bekanntmachung des Hinweises auf die Patenterteilung: **08.10.2025**
(21) Anmeldenummer: 21190184.8
(22) Anmeldetag: 06.08.2021
(51) Int. Cl.: G02B 6/32, G02B 6/38, G02B 6/42

(54) **OPTISCHER FASERSTECKER UND JUSTIERVERFAHREN**
OPTICAL FIBRE CONNECTOR AND ADJUSTMENT METHOD
CONNECTEUR DE FIBRE OPTIQUE ET PROCÉDÉ D'AJUSTEMENT

(30) Priorität: 27.08.2020 DE 102020210837
(43) Veröffentlichungstag der Anmeldung: 02.03.2022
(73) Patentinhaber: Carl Zeiss Microscopy GmbH, 07745 Jena (DE)
(72) Erfinder: KLOS, Thomas, 82166 Gräfelfing/München (DE); WILHELM, Stefan, 07745 Jena (DE); MEHNER, Thomas, 07745 Jena (DE)
(74) Vertreter: Meyer, Jork

(56) Entgegenhaltungen:
- DE-A1- 102007 051 294
- US-A1- 2001 046 345
- US-A1- 2010 080 563
- US-B1- 6 276 843

## Beschreibung

Die Erfindung betrifft einen optischen Faserstecker und ein Verfahren zur Justage des Fasersteckers.

Moderne Imaging Systeme, insbesondere solche für die dreidimensionale (3D) Bildgebung in der Mikroskopie, erfordern eine lagestabile Einkopplung der zur Beleuchtung verwendeten Strahlung. Da häufig auch eine räumliche Entkopplung von Lichtquelle und Mikroskopsystem sinnvoll ist, hat sich die Zuführung der Strahlung mittels lichtleitender Fasern, beispielsweise mittels polarisationserhaltender Single-Mode Fasern etabliert. Eine justagefreie Steckbarkeit einer polarisationserhaltenden Single-Mode Faser an beliebige Mikroskop Systeme ist dabei hinsichtlich einer flexiblen Nutzung und vereinfachten Wartung von großem Vorteil.

Bereits aus der DE 1 961 104 U ist eine Fasersteckverbindung mit einem Stecker und einer Steckdose bekannt. Der Stecker ist dabei in Form eines Kegelstumpfes ausgebildet und umfängt die lichtleitende Faser an einem Ende. Die Steckdose ist entsprechend komplementär zum Stecker geformt. Der Stecker und/oder die Steckdose können aus einem ferromagnetischen Material beziehungsweise aus einem magnetisch beeinflussbaren Material bestehen und einander anziehen. Eine Zentrierung von Stecker und Steckdose zueinander wird durch eine aufwändige und sehr präzise Herstellung der aneinander anliegenden Flächen der Steckverbindung erreicht.

Eine weitere Steckverbindung zur Übermittlung von elektrischen und optischen Daten zwischen einem Stecker und einer Steckdose ist in der US 2010/0080563 A1 beschrieben. Zur Verbesserung der Zuverlässigkeit der Übertragung können in den optischen faseroptischen Wegen Linsen und Kollektoren angeordnet sein, die dem Sammeln übertragenen Lichtes dienen.

Um Laserlicht von einer lichtleitenden Faser in ein anderes optisches System einzustrahlen, ist beispielsweise eine optische Steckverbindung für Lichtwellenleiter geeignet, wie diese in der DE 10 2007 051 294 A1 offenbart ist. Ein Stecker der Steckverbindung besitzt mehrere Steckerteile, wobei eines zur Aufnahme eines in eine Fassung eingefassten Endes eines Lichtwellenleiters dient.

Ein anderes ist mit einer Linse, mit einem Mittel zur Ausrichtung und Fixierung des Endes des Lichtwellenleiters entlang einer Strahlrichtung sowie mit einem Mittel zur Ausrichtung der Linse quer zu einer optischen Achse der Linse versehen. Ein drittes Steckerteil weist mindestens eine Kontaktfläche auf und ist mit dem ersten und/oder zweiten Steckerteil verbunden. Eine entsprechende Buchse der optischen Steckverbindung weist einen Zentrierring zur Ausrichtung des Steckers in einer Ebene senkrecht zur Strahlrichtung auf. Eine manuelle Justage des Winkels des austretenden Strahlenbündels ist mittels einer lateralen Verschiebung der Faser und der Linse gegeneinander in Grenzen möglich. Die finale Winkelgenauigkeit des austretenden kollimierten Strahls wird iterativ über mechanische Bearbeitung vier vorhandener Auflagefüße erreicht. Es erfolgt also eine individuelle Anpassung eines Steckers an eine Buchse. Die Buchse als Gegenstück hat eine polierte Auflagefläche die nur geringe zusätzlichen Winkelfehler einführt. Die Verbindung zwischen Stecker und Buchse wird durch eine Drehbewegung des Steckers und dessen Anlage an eine polierte Fläche erreicht. Gehalten wird der Stecker durch eine Kombination von Vorsprüngen und Federn. Nachteilig ist der auftretende Verschleiß aufgrund der rotatorischen Verbindungsbewegung und die aufwendige und individuelle Fertigung mit iterativer Optimierung.

Andere Lösungsansätze, wie z. B. in der US 6,276,843 B1 beschrieben, belassen die Justageelemente dauerhaft im System. Da die Kollimationsoptik im Faserzylinder nicht relativ zum Faserende justiert werden kann, muss bei einem Wechsel der Faser eine Nachjustierung von Ort und Winkel vorgenommen werden, um die erforderlichen Genauigkeiten einzuhalten.

US 2001/0046345 A1 offenbart einen einkanaligen M X N optischen Faserschalter.

Der Erfindung liegt die Aufgabe zugrunde, einen verbesserten Faserstecker vorzuschlagen. Es ist außerdem Aufgabe der Erfindung, ein verbessertes Justierverfahren vorzuschlagen.

Die Aufgabe wird hinsichtlich der optischen Fasersteckverbindung mit einem Faserstecker entsprechend des Anspruchs 1 gelöst. Vorteilhafte Weiterbildungen der Erfindung sind Gegenstand der abhängigen Ansprüche.

Der Faserstecker ist zur optischen Kopplung einer lichtleitenden Faser mit der Steckeraufnahme ausgebildet und umfasst ein Steckergehäuse zur Aufnahme und Arretierung von Bauteilen des Fasersteckers in einer vorbestimmten Relativlage zueinander. Das Steckergehäuse besitzt einen Fasereingang und ein Faserlager zur ortsfesten Aufnahme der lichtleitenden Faser. Dem Faserlager entlang eines Strahlengangs optisch nachgelagert ist mindestens eine optische Linse zum Sammeln von aus einer Stirnfläche der lichtleitenden Faser austretenden Lichts und zum Kollimieren des gesammelten Lichts. Außerdem ist an dem Steckergehäuse eine Koppelfläche mit einem Ausgang des Strahlengangs und mit einer Koppelstruktur zur Verbindung mit einer zur Koppelstruktur komplementären Aufnahmestruktur vorhanden.

Erfindungsgemäß ist dem Faserlager optisch nachgelagert neben der mindestens einen optischen Linse mindestens ein verstellbares optisches Element im Strahlengang angeordnet. In einer möglichen Ausführungsform des Fasersteckers ist die optische Linse ebenfalls verstellbar. Die Koppelstruktur des erfindungsgemäßen Fasersteckers weist eine erste Komponente einer kinematischen Kupplung sowie eine erste Komponente einer aus zwei Komponenten bestehenden magnetischen Kupplung auf.

Der Strahlengang des Fasersteckers ist bestimmt durch einen theoretischen, durch die Konstruktion des Fasersteckers vorgesehenen Weg, den von einer Faser in den Faserstecker eingestrahltes Licht bis zu einem optischen Ausgang des Fasersteckers an der Koppelfläche nimmt. Dabei ist der Strahlengang im Wesentlichen bestimmt durch eine virtuelle Achse, entlang der die optische Achse der abschließend justierten optischen Linse ausgerichtet ist.

Das mittels der lichtleitenden Faser übertragene Licht ist insbesondere Laserlicht, welches optional polarisiert sein kann.

Die kinematische Kupplung kann nach dem sogenannten Maxwell-Prinzip ausgestaltet sein. Dabei werden zum Beispiel drei V-förmige Nuten in einem Winkelabstand von 120° gegen einen gemeinsamen virtuellen Schnittpunkt ausgerichtet und mit drei dazu passenden gewölbten Auflageflächen als Gegenstücke kombiniert. Die kinematische Kupplung sichert, dass alle sechs räumlichen Freiheitsgrade definiert sind. Die entsprechenden Elemente werden geeignet auf Faserstecker und Steckeraufnahme verteilt. Aus fertigungstechnischen Gründen können statt der V-förmigen Nuten Paare von Stäben oder Halbstäben mit beispielsweise runden, gerundeten oder eckigen Profilen verwendet sein. Die entsprechenden komplementären Gegenstrukturen können beispielsweise Stäbe, Halbrundstäbe, Kugeln oder Kugelabschnitte sein. Die Stäbe, Halbstäbe, Kugeln beziehungsweise Kugelabschnitte können beispielsweise aus Stahl, einer Metalllegierung, Keramik oder einem entsprechend verschleißfesten Kunststoff bestehen. In weiteren Ausführungen können auch andere Winkelabstände gewählt sein. So können die Elemente der kinematischen Kupplung beispielsweise mit einem Winkel von 80° und zwei Winkeln von je 140° zueinander angeordnet sein. Andere Winkelkombinationen, die in Summe 360° ergeben, sind ebenfalls möglich. Statt der V-förmigen Nuten können auch anders gestaltete Elemente der kinematischen Kupplung ausgebildet sein.

Die magnetische Kupplung ist beispielsweise mittels mindestens eines Ringmagneten als erste und/oder zweite Komponente umgesetzt. Der Ringmagnet kann den optischen Ausgang des Strahlengangs aus dem Steckergehäuse, insbesondere zentrisch und/oder rotationssymmetrisch, umfangen. Auf diese Weise wird vorteilhaft eine Zentrierung des Fasersteckers, insbesondere des Ausgangs des Strahlengangs, gegenüber der Steckeraufnahme und einer darin vorhandenen Strahldurchführung erreicht.

In weiteren Ausführungen des Fasersteckers kann die erste Komponente der magnetischen Kupplung in mehrere Abschnitte unterteilt sein. Entsprechendes gilt für eine Steckeraufnahme (siehe Ausführungsbeispiele). Sind erste und zweite Komponente als Magneten ausgebildet, sind diese entsprechend einander entgegengesetzt gepolt angeordnet. In alternativen Ausführungen kann der Ringmagnet beziehungsweise können die Abschnitte des oder der Ringmagneten asymmetrisch um den Ausgang respektive um einen Durchgang in der Steckeraufnahme angeordnet sein. Relevant ist dabei, dass im Zusammenwirken der ersten und der zweiten Komponente der magnetischen Kupplung eine Zentrierung des Ausgangs des Fasersteckers zu einem Durchgang der Steckeraufnahme über die Elemente der kinematischen Kupplung resultiert.

Ist nur eine der Komponenten ein Magnet, dann enthält die entsprechende andere Komponente ein magnetisch beeinflussbares Material. In einem einfachen und effizienten Ausführungsbeispiel ist das Material Eisen. In weiteren Ausführungen kann das Material eine eisenhaltige Legierung oder ein eisenhaltiger Verbund- oder Kunststoff sein. Das magnetisch beeinflussbare Material kann vollflächig vorhanden sein, in Teilflächen aufgeteilt sein und/oder in ein Trägermaterial eingebettet sein. Eine Einbettung beispielsweise in einen geeigneten Kunststoff schützt das Material vor unerwünschten chemischen Reaktionen, beispielsweise vor einer Korrosion.

Der erfindungsgemäße Faserstecker ermöglicht im Zusammenwirken mit einer weiter unten beschriebenen Steckeraufnahme eine selbstzentrierende und lagestabile Steckverbindung. Dabei kann auf individuelle mechanische Anpassungen verzichtet werden, selbst wenn unterschiedliche Faserstecker und Steckeraufnahmen miteinander kombiniert werden. Eine verdrehsichere Ausführung stellt sicher, dass eine optische Polarisationsachse unverändert bleibt und linear polarisiertes Licht in einer vorbestimmten Ausrichtung übertragen wird. Die Zentrierung und Positionierung der Lage von Faserstecker und Steckeraufnahme zueinander wird vorteilhaft durch die kinematische Kupplung erreicht, während eine erforderliche Haltekraft sowie ebenfalls eine Zentrierung durch Wirkung der magnetischen Kupplung erzeugt ist. Damit ist eine leicht handhabbare, flexible und reproduzierbare Herstellung und Nutzung einer Steckverbindung möglich, ohne dass Verschleiß auftritt. Die gegen eine unerwünschte Verdrehung gesicherte Ausführung der optischen Steckverbindung gelingt beispielsweise durch die kinematische Kupplung.

Sind die Komponenten der kinematischen Kupplung in einer alternativen Ausführungsform asymmetrisch angeordnet, beispielsweise nicht alle unter einem 120°-Winkel zueinander und/oder mit unterschiedlichen radialen Abständen, kann der Faserstecker nur in einer einzigen Relativstellung mit der Steckeraufnahme verbunden werden. Zum Beispiel erlaubt eine solche Ausführung die Definition und das Beibehalten der Lage einer Polarisationsrichtung (Schwingungsebene des E-Vektors) bei Verwendung von linear polarisiertem Licht.

Die präzise und reproduzierbare Herstellung der Steckverbindung ist eine wesentliche Voraussetzung der Justagefreiheit der erfindungsgemäßen Steckverbindung. Um sicherzustellen, dass bei jedem erneuten Steckvorgang die Lage des insbesondere kollimierten Strahls präzise justiert ist, kann der Faserstecker verstellbare optische Elemente aufweisen, die nach einer einmalig erfolgten Justierung im justierten Zustand verbleiben. Eine erneute Justierung bei einem späteren Steckvorgang ist daher nicht erforderlich. Optional können die verstellbaren optischen Elemente im justierten Zustand dauerhaft arretiert werden.

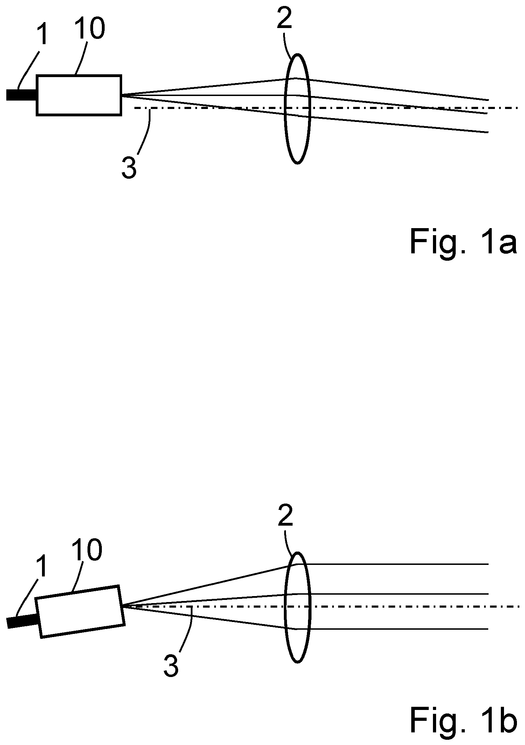

Wie schematisch in Fig. 1a und 1b gezeigt, sind bezogen auf die Justage einer Faserferrule 10 einer lichtleitenden Faser 1 relativ zur Kollimationsoptik 2 (optische Linse 2) im Wesentlichen zwei Fehler möglich. Die Faserferrule 10 oder Ferrule 10 umfasst in bekannter Weise das Ende der Faser 1. Das Ende, an dem das mit der Faser 1 geführte Licht austritt, ist in einer Fokusebene der optischen Linse 2 angeordnet.

Bei der ersten Möglichkeit sitzt die Ferrule 10 nicht oder nicht genau auf der optischen Achse 3 der Linse 2, ist jedoch parallel zu dieser gerichtet (Fig. 1a). Das Ende der Faser 1 befindet sich nicht im Brennpunkt, aber in der Brennebene der optischen Linse 2. Aufgrund dieses Parallelversatzes tritt ein Winkelfehler im Unendlichstrahlengang hinter der optischen Linse 2 auf.

Ist dagegen die Ferrule 10 relativ zur optischen Achse 3 der Linse 2 schräg gestellt, trifft also die Strahlung aus der Faser 1 schräg auf die optische Linse 2, führt dies zu einem Ortsversatz im kollimierten Strahl hinter der Linse 2 (Fig. 1b). In der grafischen Darstellung dieser Situation ist der Hauptstrahl zwar verkippt, hat seinen Ursprung aber im Brennpunkt.

Befindet sich das Faserende, also der Strahlaustritt aus der Faser 1, in der Brennebene beziehungsweise im Fokuspunkt der optischen Linse 2, bewirkt die optische Linse 2 nach Durchgang der Strahlung durch die optische Linse 2 einen kollimierten Strahl (Abbildung nach Unendlich / Unendlichstrahl; Fig. 1a und 1b). Unter dieser Bedingung können Winkel und Ortsversatz getrennt voneinander eingestellt werden. Deshalb weist der erfindungsgemäße Faserstecker mindestens ein verstellbares optisches Element auf, mittels dem die Winkellage und/oder der Ortsversatz eingestellt werden kann.

Die Faser ist vorteilhaft an ihrem Ende von der Ferrule umfasst, die wiederum optional von einer Hülle (Sleeve) umgeben sein kann und die in dem Faserstecker beispielsweise in einem Faserlager gehalten wird. Die Hülle ist beispielsweise ein geschlitztes Keramikröhrchen, das ein Klemmen der Ferrule erlaubt, ohne dabei Druck auf die Faser auszuüben. Um Rückreflexe in die Faser zu reduzieren, kann diese an ihrem Ende einen Schrägschliff von beispielsweise 8° aufweisen. Eine solche Anschrägung ist bei der Integration der Faser zu berücksichtigen. Vorteilhaft ist die Faser mit einer Vorrichtung zur Zugentlastung versehen, um einen sicheren Halt der Faser in dem Faserstecker und eine dauerhaft hohe Reproduzierbarkeit des Steckprozesses und der Lichtübertragung zu erreichen.

In einer möglichen Ausführungsform des Fasersteckers ist als verstellbares optisches Element ein Prismenkeilpaar mit zwei gegeneinander verstellbaren Prismenkeilen vorhanden (ein sogenanntes Risley-Paar; siehe z. B. US 6,859,120 B2 und US 4,515,447 A1). Die Prismenkeile sind dabei unabhängig voneinander um eine parallel zur optischen Achse gerichtete Achse drehbar. Zusätzlich oder alternativ können die Prismenkeile um mehrere Achsen kippbar sein. Mit dem kippbaren Prismenkeilpaar können der Winkel und der Ortsversatz eingestellt werden.

In einer weiteren Ausführung des erfindungsgemäßen Fasersteckers kann als verstellbares optisches Element zur Justage des Strahlverlaufs ein Schwenkkeilpaar vorhanden sein. Dieses umfasst zwei Linsen, deren voneinander abgewandten Seitenflächen als Planflächen ausgebildet sind und die sich relativ zueinander neigen und/oder lateral verschieben lassen. Beispielsweise ist eine der Linse als eine plan-konkave Linse und die andere Linse als eine plan-konvexe Linse ausgebildet. Vorteilhaft sind die konkave und die konvexe Seitenfläche hinsichtlich ihrer Größe und Wölbung aneinander angepasst, so dass diese direkt oder mit nur einem geringen Spalt zwischen ihnen ineinander eingreifen und trotzdem relativ zueinander bewegt, insbesondere gekippt und/oder verschoben werden können. Das Schwenkkeilpaar kann in weiteren Ausführungen des Fasersteckers als Ganzes gekippt und arretiert werden.

Es ist in einer weiteren Ausführungsform möglich, dass als verstellbares optisches Element wenigstens eine planparallele Platte (Planplatte, Platte) angeordnet ist. Diese kann bezüglich des Strahlengangs des Fasersteckers um wenigstens eine Achse und um einen Kippwinkel geneigt werden. Befindet sich diese Planplatte im Abschnitt mit divergenten Strahlverlauf, wird durch Wirkung der mindestens einen Planplatte im Ergebnis der Winkel eingestellt. Ist die Planplatte dagegen im Abschnitt mit kollimiertem Strahlverlauf angeordnet, wird durch eine Lageänderung, insbesondere durch eine Änderung der Neigung (Kippwinkel), im Ergebnis der Ortsversatz eingestellt. Besonders vorteilhaft ist die Ausführung der Planplatte in Form eines kugelförmigen Grundkörpers mit zwei zueinander parallelen Seitenflächen (z. B. US 8,254,735 B2; "window ball"). Vermittels einer Kippung um zwei zum Strahlengang orthogonaler Achsen können Ortsversätze in zwei lateralen Freiheitsgraden korrigiert werden.

Für die vorstehend beschriebene Ausführungsform ist es möglich, dass eine weitere planparallele Platte und/oder zusätzlich ein Paar gegeneinander verstellbarer Prismenkeile im Strahlengang angeordnet ist beziehungsweise angeordnet sind. Sind mindestens eine Planplatte und ein Prismenkeil beziehungsweise ein Prismenkeilpaar (Drehkeilpaar mit identischen Keilwinkeln) vorhanden, ist das Einstellen des Ortsversatzes und des Winkels ermöglicht. Zwei oder mehr Planplatten erlauben eine variablere Reaktion auf die aktuellen Winkel beziehungsweise Ortsversätze. Werden beispielsweise zwei Planplatten verwendet, sind diese mit einander entgegengesetzten Kippwinkeln angeordnet beziehungsweise können diese mit den entsprechenden Kippwinkeln eingestellt werden.

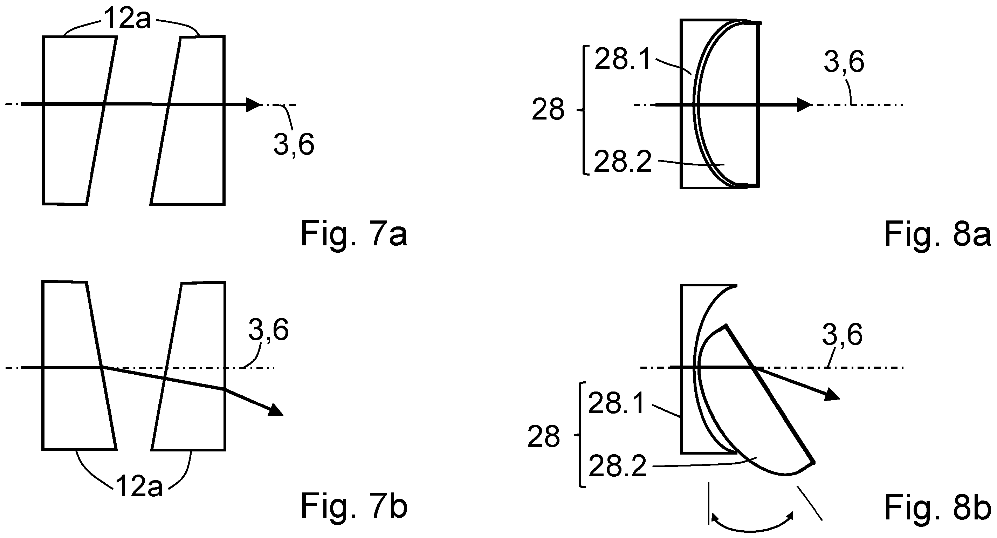

In weiteren möglichen Ausführungen des erfindungsgemäßen Fasersteckers kann auf die Planplatte beziehungsweise die Planplatten verzichtet werden, wenn das bereits erwähnte Prismenkeilpaar in einer gemeinsamen Fassung angeordnet ist, die es erlaubt, die justierten Keile zusätzlich in zwei Achsen zu verkippen, um einen Parallelversatz des Strahlenbündels zu erreichen. Befindet sich das gemeinsam gefasste Prismenkeilpaar (Drehkeilpaar) im Bereich eines kollimierten Strahlverlaufs, so werden die Prismenkeile in eine sogenannte Nullstellung gebracht (siehe auch Fig. 7b), bei der sich die optischen Wirkungen der beiden Prismenkeile gegeneinander aufheben. Auf diese Weise ist bei einem Verkippen des gemeinsam gefassten Prismenkeilpaares eine optische Wirkung entsprechend dem Verkippen einer Planplatte erreicht Der Ortsversatz kann dann durch Verkippen des in Nullstellung befindlichen gefassten Prismenkeilpaars eingestellt und das Prismenkeilpaar in dieser Kippstellung fixiert werden. Die Stärke der Kippung hängt unter anderem von der Ausrichtung der Planflächen, nämlich entweder einander zu- beziehungsweise einander abgewandt, sowie von dem Keilwinkel der Prismenkeile ab.

Werden Prismenkeile beziehungsweise Prismenkeilpaare verwendet, ist bei einer vorgesehenen Nutzung der optischen Steckverbindung über einen breiten Wellenlängenbereich, insbesondere den sichtbaren Bereich (VIS, ca. 400 - 700 nm, vorzugsweise bis 645 nm; in weiteren Ausführungen bis 800 nm), eine chromatische Korrektur der Prismenkeile erforderlich. Dafür werden Materialien bezüglich ihrer Brechzahl und Abbezahl (Dispersionseigenschaften) geeignet kombiniert, wobei der Prismenwinkel an die Brechzahl angepasst wird, um eine geeignete Gesamtablenkung bei gleichzeitig ausreichender Empfindlichkeit zu erreichen. Eine geeignete Glaskombination für ein achromatisches Prisma ist zum Beispiel N-FK5 und F2 (beide von SCHOTT ADVANCED OPTICS).

Die optische Linse sowie, falls vorhanden, die Linsen des Schwenkkeilpaares, können ebenfalls hinsichtlich der zur Verwendung vorgesehenen Wellenlängen chromatisch korrigiert sein. Auf die Prismenkeile kann in einer weiteren Ausgestaltung des Fasersteckers verzichtet werden, wenn die optische Linse zusätzlich zu einer Verschiebung entlang des Strahlengangs (z-Richtung) auch orthogonal zum Strahlengang (x-Richtung beziehungsweise y-Richtung) verstellt werden kann und die optische Linse außerdem gegenüber dem Strahlengang um Achsen in x-Richtung und in y-Richtung geneigt werden kann (Kippwinkel Phiₓ beziehungsweise Phi_{y}). Mindestens eine Planplatte ist in dieser Ausführung im Strahlengang vorhanden und dient der Korrektur noch vorhandener Restfehler. Diese Ausgestaltung kommt mit einer minimalen Anzahl optischer Elemente aus.

In das Faserlager kann eine lichtleitende Faser eingelegt und gehalten sein. Dabei ist eine Lichtaustrittsfläche der Faser entlang des Strahlengangs gerichtet, die optische Achse oder Längsachse der Faser ist also entlang des Strahlengangs des Fasersteckers gerichtet. Dabei können noch Winkelfehler und/oder Ortsversätze auftreten, die durch eine entsprechende Justage des mindestens einen verstellbaren optischen Elements korrigiert werden können, beziehungsweise bereits korrigiert sind. Die in das Faserlager aufgenommene Faser kann mit einem im Faserlager vorhandenen Klemmelement gehalten werden beziehungsweise gehalten sein.

In einem abschließend justierten Zustand des Fasersteckers sind die verstellbaren optischen Elemente so justiert, dass ein aus der Faser austretendes Licht am optischen Ausgang des Fasersteckers parallel und symmetrisch zum Strahlengang bereitgestellt ist beziehungsweise bereitgestellt werden kann. Der justierte Strahl ist in Bezug auf die kinematische Kupplung zentriert, sodass bei einem Herstellen der Steckverbindung von Faserstecker und Steckeraufnahme der Lichtstrahl immer in einer vorgesehenen Ausrichtung, und bei polarisiertem Licht gegebenenfalls in einer korrekten Drehlage, vom Faserstecker in eine die Steckeraufnahme tragende optische Vorrichtung eingestrahlt wird beziehungsweise eingestrahlt werden kann. Um diesen justierten Zustand beizubehalten, können die verstellbaren optischen Elemente in dem derart justierten Zustand unlösbar arretiert sein. Eine solche, nicht zur Erfindung gehörende, unlösbare Arretierung kann beispielsweise durch Einkleben, Vergießen, Verlöten oder Verschweißen der verstellbaren optischen Elemente sowie optional der optischen Linse erfolgen.

Die bereits angesprochene Steckeraufnahme zur Verbindung mit dem Faserstecker weist eine zu der ersten Komponente der kinematischen Kupplung komplementär gestaltete zweite Komponente der kinematischen Kupplung als Aufnahmestruktur auf. Außerdem ist eine zweite Komponente der aus zwei Komponenten bestehenden magnetischen Kupplung vorhanden. Da die Steckeraufnahme zumindest im Bereich der Aufnahmestruktur und der zweiten Komponente der magnetischen Kupplung vorteilhaft im Wesentlichen eben oder plattenförmig gestaltet ist, wird die Bezeichnung Buchse oder Steckerbuchse nicht verwendet.

Die komplementäre Ausgestaltung der kinematischen Kupplung stellt eine korrekte Relativlage von Faserstecker und Steckeraufnahme sicher. Die magnetische Kupplung bewirkt die erforderlichen Haltekräfte, ohne dass es hierfür mechanischer Bauteile bedarf.

Lediglich um ein versehentliches Unterbrechen der Steckverbindung zu vermeiden, können Faserstecker und Steckeraufnahme mittels einer mechanischen Sicherung, beispielsweise mittels einer kraftfreien Schraubverbindung oder eines Sicherungsbügels, gesichert sein.

In einer Ausführung der Steckeraufnahme ist in ihrem Strahlengang eine verstellbare planparallele Platte angeordnet. Mit einer solchen Steckeraufnahme kann die erforderliche Toleranz für die Strahllage des Fasersteckers beziehungsweise der Steckverbindung weiter gewählt werden. Die planparallele Platte in der Steckeraufnahme kann vergleichsweise einfach justiert werden. Die so gestaltete Steckeraufnahme kann mit allen vorbeschriebenen Ausführungen des Fasersteckers kombiniert werden.

Eine erfindungsgemäße optische Steckverbindung umfasst einen erfindungsgemäßen Faserstecker in einer der vorstehend beschriebenen Ausführungen und eine Steckeraufnahme oder einen erfindungsgemäßen Faserstecker und eine Steckaufnahme aufweisend eine zu der am Faserstecker befindlichen ersten Komponente der kinematischen Kupplung komplementär gestaltete zweite Komponente der kinematischen Kupplung als Aufnahmestruktur und eine zweite Komponente der aus zwei Komponenten bestehenden magnetischen Kupplung.

Die Aufgabe wird außerdem mit einem Verfahren zur Justierung eines Fasersteckers gelöst, das im Anspruch 11 definiert wird, wobei ein Faserstecker mit einer in das Faserlager eingelegten und ausgerichteten Faser verwendet wird.

Das Verfahren umfasst das Ausrichten des Fasersteckers und dessen Strahlengangs relativ zu einer externen Justiervorrichtung. Anschließend wird die Justiervorrichtung mit Licht des Fasersteckers beleuchtet. Die verstellbaren optischen Elemente werden daraufhin justiert, bis ein aus der Faser austretendes Licht parallel und symmetrisch zum Strahlengang am optischen Ausgang des Steckergehäuses bereitgestellt ist. Die als Kollimator wirkende optische Linse kann dazu in einer Ausgestaltung des Verfahrens in Richtung des Strahlengangs verschoben werden, um die Strahlausbreitung einzustellen. Der Strahlwinkel kann durch ein Verschieben der optischen Linse quer zum Strahlengang justiert werden. Die Justierung kann beispielsweise mit einem Messsystem wie zum Beispiel einem fokussierbaren Autokollimationsfernrohr (FAKF; Kombination aus Fluchtfernrohr und (Auto-)Kollimationsfernrohr) erfolgen, das zur Justierung von Ort beziehungsweise Winkel jeweils entsprechend fokussiert wird. Alternativ kann die Justierung unter Verwendung zweier getrennter Strahlengänge mit Referenzmarken für Ort und Winkel und vorgelagerten entsprechend angepassten Optiken durchgeführt werden. Ist der justierte Zustand der verstellbaren optischen Elemente im Faserstecker erreicht, werden diese arretiert. Optional, jedoch nicht erfindungsgemäß, können die verstellbaren optischen Elemente im justierten Zustand unlösbar arretiert werden, indem diese beispielsweise eingeklebt, verlötet, verschweißt oder eingegossen werden. Zusätzlich kann die optische Linse, insbesondere wenn diese verstellbar ausgeführt ist, sowie optional die Ferrule im Faserlager unlösbar arretiert werden.

Im Ergebnis wird ein monolithischer Faserstecker erhalten, der bereits justiert an unterschiedlichen Steckeraufnahmen angesteckt werden kann, ohne erneut justiert werden zu müssen. Dabei ist die korrekte Strahllage durch das beschriebene Justierverfahren und die Festlegung der Komponenten des Fasersteckers dauerhaft sichergestellt. Die korrekte Ausrichtung des Fasersteckers relativ zur Steckeraufnahme wird durch die Kombination aus kinematischer und magnetischer Kupplung erreicht. Auf diese Weise wird im Zusammenwirken der technischen Maßnahmen im Faserstecker sowie der Maßnahmen zur reproduzierbaren Schaffung der Steckverbindung mittels der beiden Kupplungen eine optische Steckverbindung geschaffen, die justagefrei und reproduzierbar zwischen beliebigen erfindungsgemäßen Fasersteckern und Steckeraufnahmen hergestellt werden kann.

Die Vorteile der erfindungsgemäßen optischen Steckverbindung sowie des erfindungsgemäßen Justageverfahrens sind zum Beispiel in einer erhöhten Stabilität der Kupplung gegen Umgebungseinflüsse insgesamt und in reduzierten Aufwänden und damit Kosten für die Installation, den Service und die Instandhaltung der Systeme zu sehen. Insbesondere sind keine aufwändigen Nachjustierungen der Strahllage nötig. Außerdem kann vorteilhaft auf eine Verschraubung der Komponenten und die dauerhafte Integration von Justagehilfsmitteln in dem Faserstecker und in die Steckeraufnahme verzichtet werden. Die Wiederholbarkeit der Steckverbindung ist aufgrund der vollständigen kinematischen Definition, ideal. Sie stellt sowohl in der räumlichen Lage als auch im Raumwinkel minimale Abweichungen sicher. Aufgrund der Symmetrie der Anordnung ergibt sich zudem bei Temperaturänderungen eine homogene Ausdehnung, so dass ein solches System optimale Stabilitätseigenschaften bei schwankenden Umgebungstemperaturen besitzt. Da in Bezug auf die Steckwiederholbarkeit, die Strahllage und der Strahlwinkel der Einzelstecker einen bestimmten Grenzwert nicht überschreiten dürfen, werden im Rahmen der vorliegenden Erfindung die individuellen Stecker aktiv gegen eine gemeinsame externe Referenz justiert. Weiterhin werden durch die Fixierung über einen zentralen Ringmagneten die selbstzentrierenden Eigenschaften der kinematischen Kupplung optimal genutzt, so dass ein echtes Plug & Play möglich ist. Die Genauigkeit in Winkel und Ort ist nicht erst nach einer Verschraubung oder einem Klemmen der Komponenten der Steckverbindung vorhanden, sondern instantan über den Steckvorgang.

Durch die Erfindung wird das Justierverfahren vereinfacht und die Lösung wird hinsichtlich der Fertigungszeiten deutlich kostengünstiger. Außerdem sind eine Montage und/oder die Justage teilweise oder ganz automatisierbar. Neben der erforderlichen Präzision ist die vorgeschlagene Lösung besonders verschleißarm.

Die Erfindung kann im Weiteren beispielsweise für eine reproduzierbare Aus- und Ankupplung von Licht aus einer Single Mode-Faser an ein Gerätesystem, beispielsweise an ein Mikroskop beziehungsweise an eine Schnittstelle eines Mikroskops, mit diesem verbunden und verwendet werden. Das Mikroskop kann beispielsweise ein Lichtblattmikroskop, ein konfokales, ein konfokalscannendes oder ein Weitfeldmikroskop sein. Weitere Verwendungen, gegebenenfalls unter Einhaltung hoher Anforderungen an die Präzision, sind das Einkoppeln eines Freistrahls in eine Single Mode oder Multimode-Faser bekannt. Auch hier müssen sowohl der Winkel als auch die Strahllage stabil korrigiert werden. In einer solchen Ausführung kann zusätzlich eine Buchse vorhanden sein, mittels der eine aktive Positionierung relativ zum Freistrahl ermöglicht ist. Beispielsweise ist auch eine Verwendung mit fest an einem Mikroskop montierter Faser und justagefreier Steckung auf der Seite der Lichtquelle, möglich.

Die Erfindung wird nachfolgend anhand von Ausführungsbeispielen und Abbildungen näher erläutert.

Dabei zeigen:
- Fig. 1a: eine schematische Darstellung eines resultierenden Winkelfehlers;
- Fig. 1b: eine schematische Darstellung eines resultierenden Ortsversatzes;
- Fig. 2: eine schematische Darstellung eines ersten Ausführungsbeispiels einer erfindungsgemäßen optischen Steckverbindung mit einem erfindungsgemäßen Faserstecker und mit verstellbaren optischen Elementen im Unendlichstrahlengang;
- Fig. 3: eine schematische Darstellung eines zweiten Ausführungsbeispiels einer erfindungsgemäßen optischen Steckverbindung mit einem erfindungsgemäßen Faserstecker und mit verstellbaren optischen Elementen im Unendlichstrahlengang, sowie einer schematischen Darstellung der Schnittstelle an ein Mikroskop;
- Fig. 4: eine schematische Darstellung eines dritten Ausführungsbeispiels einer erfindungsgemäßen optischen Steckverbindung mit einem erfindungsgemäßen Faserstecker und mit verstellbaren optischen Elementen im Unendlichstrahlengang;
- Fig. 5: eine schematische Darstellung eines vierten Ausführungsbeispiels einer erfindungsgemäßen optischen Steckverbindung mit einem erfindungsgemäßen Faserstecker und mit verstellbaren optischen Elementen in einem divergenten Abschnitt des Strahlengangs;
- Fig. 6: eine schematische Darstellung eines fünften Ausführungsbeispiels einer erfindungsgemäßen optischen Steckverbindung mit einem erfindungsgemäßen Faserstecker und mit verstellbaren optischen Elementen in einem divergierenden Abschnitt des Strahlengangs und im Unendlichstrahlengang;
- Fig. 7a: eine schematische Darstellung einer Nullstellung zweier zueinander verstellbarer Prismenkeile und der daraus resultierenden optischen Wirkung;
- Fig. 7b: eine schematische Darstellung zweier zueinander verstellter Prismenkeile und der daraus resultierenden optischen Wirkung;
- Fig. 8a: eine schematische Darstellung eines Paares von Schwenkkeilen in Nullstellung sowie der daraus resultierenden optischen Wirkung;
- Fig. 8b: eine schematische Darstellung des Paares von Schwenkkeilen in einem verschwenkten Zustand sowie der daraus resultierenden optischen Wirkung;
- Fig. 9: eine schematische Darstellung eines Ausführungsbeispiels einer Koppelfläche des Steckergehäuses eines Fasersteckers mit ersten Komponenten einer kinematischen Kupplung und mit einer ersten Komponente einer magnetischen Kupplung;
- Fig. 10: eine schematische Darstellung eines Ausführungsbeispiels einer beispielhaften Steckeraufnahme mit zweiten Komponenten einer kinematischen Kupplung und mit einer zweiten Komponente einer magnetischen Kupplung;
- Fig. 11: eine schematische Darstellung eines sechsten Ausführungsbeispiels einer erfindungsgemäßen optischen Steckverbindung mit einem erfindungsgemäßen Faserstecker und mit verstellbaren optischen Elementen im Unendlichstrahlengang und mit einer planparallelen Platte im Strahlengang der Steckeraufnahme;
- Fig. 12: eine schematische Darstellung einer Anordnung zur Justierung eines Fasersteckers; und
- Fig. 13: ein Ablaufplan einer Ausgestaltung eines erfindungsgemäßen Justierverfahrens.

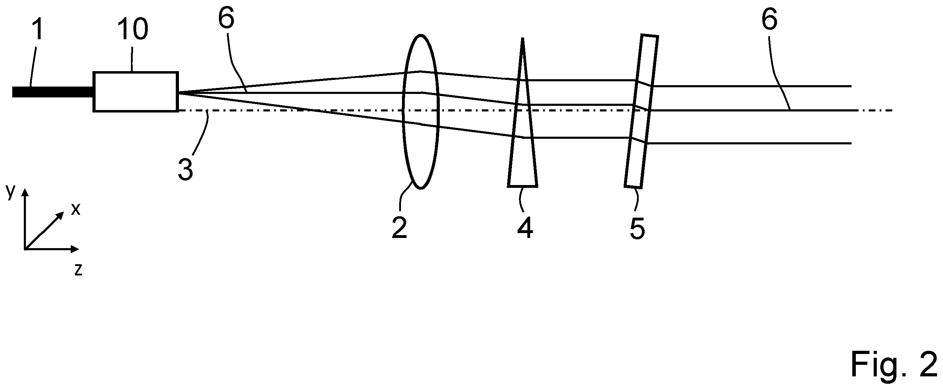

Die in den Figuren 2 bis 9 dargestellten Ausführungsbeispiele sind schematische Darstellungen. Die Bezugszeichen kennzeichnen jeweils gleiche technische Elemente.

In Fig. 2 ist exemplarisch eine Anordnung mehrerer optischer Elemente in einem Strahlengang 6 gezeigt. Außerdem ist die resultierende Korrekturwirkung dieser optischen Elemente veranschaulicht.

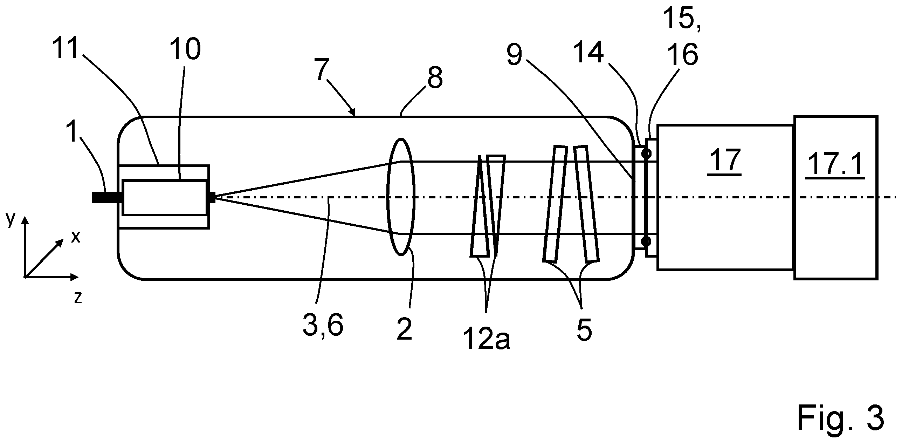

Die in der Ferrule 10 gefasste Faser 1 ist parallel zur optischen Achse 3, aber zu dieser versetzt ausgerichtet. Der Strahlengang 6 und die optische Achse 3 fallen in diesem Abschnitt nicht zusammen, d.h. der Strahlengang 6 verläuft parallel versetzt zur optischen Achse 3. Ohne eine Korrektur würde ein resultierender Winkelfehler des kollimierten Strahls auftreten, wie dieser in Fig. 1a gezeigt ist. Das aus der Stirnseite der Faser 1 austretende Licht divergiert und trifft auf die als Kollimationsoptik fungierende optische Linse 2. Durch Wirkung der optischen Linse 2 wird das Licht kollimiert und gelangt unter einem Winkel zur optischen Achse 3 zu einem optischen Keil oder Prismenkeil 4. Dieser ist hinsichtlich seiner optischen Eigenschaften, insbesondere hinsichtlich seiner lichtbrechenden Eigenschaften, sowie seiner relativen Lage im Strahlengang 6 so ausgelegt beziehungsweise angeordnet, dass die Strahlen des Lichts nach Durchlaufen des Prismenkeils 4 parallel zur optischen Achse 3 verlaufen. Wie insbesondere an dem mittleren Strahl zu sehen ist, kann noch ein Ortsversatz vorliegen. Dieser wird durch eine ebenfalls im Strahlengang 6 befindliche Planplatte 5 korrigiert. Die Planplatte 5 ist entsprechend des zu korrigierenden Ortsversatzes und unter Berücksichtigung ihrer optischen Eigenschaften gegenüber der optischen Achse 3 geneigt. Im Ergebnis weisen die Strahlen des Lichts nach Verlassen der Planplatte 5 keinen Winkelfehler und keinen Ortsversatz in Bezug auf die Zeichnungsebene auf. Strahlengang 6 und optische Achse 3 verlaufen zueinander symmetrisch und fallen im Beispiel nach der Planplatte 5 zusammen. Der Strahlengang 6 ist nun entlang der optischen Achse 3 ausgerichtet. Das derart korrigierte Licht kann an einer Schnittstelle 17 (siehe Fig. 3 bis 6) für eine weitere Nutzung bereitgestellt werden. Um die gewünschte Korrekturwirkung zu erzielen, sind der Prismenkeil 4 und die Planplatte 5 verstellbar, beispielsweise sind diese verdrehbar oder verkippbar.

Das in Fig. 2 gezeigte Prinzip ist in einem ersten Ausführungsbeispiel einer erfindungsgemäßen optischen Steckverbindung in Fig. 3 umgesetzt.

Ein Faserstecker 7 umfasst ein Steckergehäuse 8 mit einem Faserlager 11, in das die Faser 1 eingelegt ist. Das eingestrahlte Licht wird an einem Ausgang 9 des Steckergehäuses 8 aus dem Faserstecker 7 abgestrahlt. Die mit der Ferrule 10 gefasste Faser ist in dem Faserlager 11 ortsfest gehalten. Das Licht trifft nach einem Abschnitt des Strahlengangs 6 mit divergierenden Strahlen des Lichts auf die optische Linse 2 und wird durch Wirkung der im Strahlengang 6 nachgeordneten verstellbaren optischen Elemente hinsichtlich des Winkelfehlers und des Ortsversatzes korrigiert. Der Strahlengang ist vereinfachend in einen Abschnitt mit divergierenden Lichtstrahlen und in einen Abschnitt mit kollimierten Lichtstrahlen unterteilt.

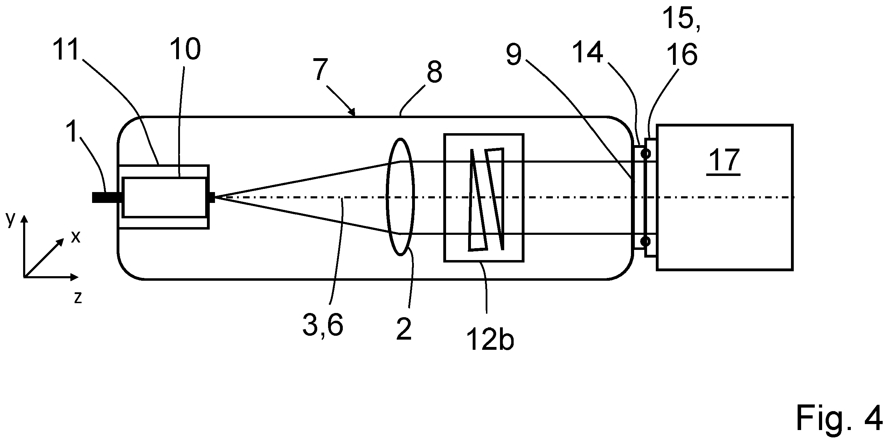

In den in den Figuren 3 und 4 dargestellten Ausführungsbeispielen erfolgt die Strahlmanipulation beziehungsweise die Korrektur vollständig im Unendlichstrahl, also im Abschnitt des Strahlengangs 6 mit kollimierten Lichtstrahlen. In dem in Fig. 3 gezeigten ersten Ausführungsbeispiel ist statt eines einzelnen Prismenkeils 4 (siehe Fig. 2) ein Prismenkeilpaar 12a mit gegeneinander verstellbaren Prismenkeilen vorhanden. Diesen im Strahlengang 6 nachgeordnet sind zwei unabhängig voneinander verstellbare Planplatten 5 (um die x-Achse und/oder um die y-Achse kippbar) vorhanden. Das kollimierte Licht wird an dem Ausgang 9 an eine Schnittstelle 17 beispielsweise eines Mikroskops 17.1 übergeben. Im Bereich einer am Ausgang 9 befindlichen Koppelfläche 13 (siehe Fig. 7 und 8) des Steckergehäuses 8 ist eine Koppelstruktur 14 vorhanden. Diese wechselwirkt mit einer Aufnahmestruktur 15 einer Steckeraufnahme 16. Im Beispiel wird über das Prismenkeilpaar 12a der Winkel und über das Paar der Planplatten 5 der Ort auf die jeweiligen Zielwerte eingestellt.

Auf die Planplatten 5 kann verzichtet werden (Fig. 4), wenn das Paar Prismenkeile (Prismenkeilpaar 12b) in einer gemeinsamen Fassung angeordnet ist (durch einen gemeinsamen Rahmen symbolisiert), die es erlaubt, die justierten Keile zusätzlich um zwei Achsen(x und y) zu verkippen, um einen Parallelversatz des Strahlenbündels einzustellen und einen Ortsversatz korrigieren zu können. Die jeweils nach außen, weg von dem jeweils anderen Prismenkeil weisenden Seitenflächen des gemeinsam gefassten Prismenkeilpaars 12b erstrecken sich in der dargestellten Ausgangsstellung des Prismenkeilpaars 12b orthogonal zur optischen Achse 3 in einer x-y-Ebene.

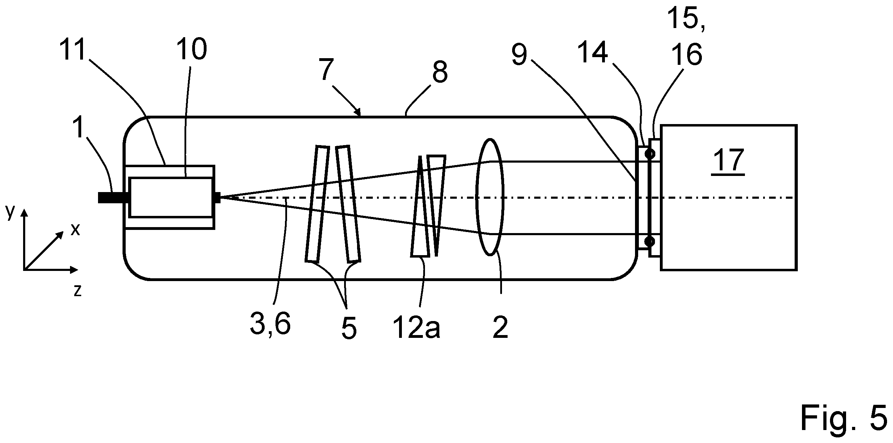

In einem vierten Ausführungsbeispiel der erfindungsgemäßen optischen Steckverbindung sind die verstellbaren optischen Elemente (Justagemittel) im divergenten Abschnitt des Strahlengangs 6 angeordnet (Fig. 5). Im Gegensatz zu dem zweiten und dritten Ausführungsbeispiel dienen die Planplatten 5 der Winkeleinstellung und das Prismenkeilpaar 12a der Justage des Ortsversatzes in Bezug auf den kollimierten Strahl. Aufgrund des erhöhten Platzbedarfs und der daraus resultierenden längeren Brennweite der Kollimationsoptik 2 und dem damit verbundenen größeren Strahldurchmesser ändern sich die Anforderungen an die Schnittstelle 17 im Mikroskop und der benötigte Bauraum für den Faserstecker 7 nimmt zu. Um die längere Brennweite der Kollimationsoptik 2 zu ermöglichen entfällt gegebenenfalls ein vergrößerndes Teleskop im nachfolgenden optischen System. Gleichzeitig erhöhen sich die Anforderungen an die Positioniergenauigkeit der Kollimationsoptik 2 sowie an die Genauigkeit der mechanischen Schnittstelle, also an die kinematischen Kupplung 19, insbesondere in Bezug auf die einzuhaltenden Winkelanforderungen. Der im nachfolgenden optischen System (Mikroskop) benötigte Strahldurchmesser wird entsprechend, ganz oder teilweise bereits am Ausgang des Fasersteckers realisiert.

Da die Brennweite 1:1 in die Justierempfindlichkeit der optischen Linse 2 gegenüber der Faserferrule 10 eingeht, ist die Verwendung einer möglichst kurzbrennweitigen Kollimationsoptik 2 vorteilhaft für eine handhabbare Empfindlichkeit der Justage. Die entsprechende Nachvergrößerung auf den notwendigen Strahldurchmesser im nachfolgenden optischen System des Mikroskops, beispielsweise mittels eines entsprechenden Teleskops, begünstigt zudem die Winkelempfindlichkeit der Schnittstelle 17 an sich. Bei einer typischen NA der Faser von <= 0,1 in Verbindung mit einer circa 6-fachen Nachvergrößerung ist beispielsweise ein guter Kompromiss mit einer Kollimation auf einen Strahldurchmesser im Bereich von 0,7 mm gegeben. Die Kollimationsoptik weist dazu beispielsweise eine Brennweite zwischen 4 mm und 6 mm auf.

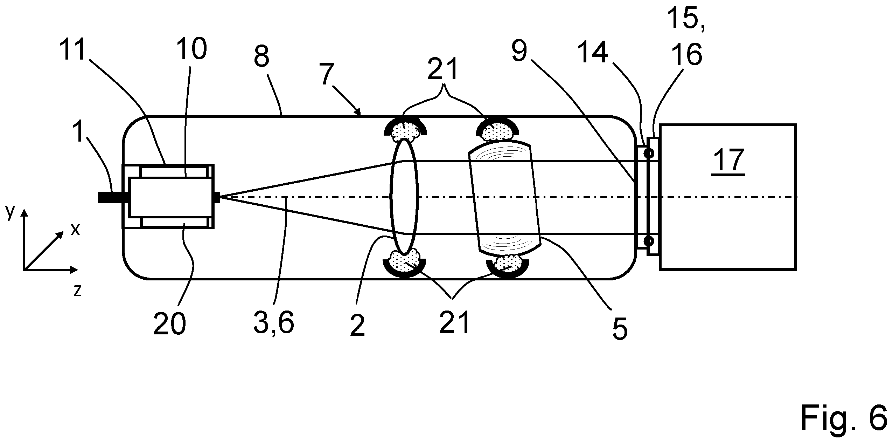

In einem fünften Ausführungsbeispiel der optischen Steckverbindung ist die optische Linse 2 verstellbar ausgeführt (Fig. 6). Im kollimierten Abschnitt des Strahlengangs 6 ist eine ebenfalls verstellbare Planplatte 5 vorhanden, wobei Letztere in Form eines sogenannten "window ball" ausgebildet ist. Die gewölbte seitliche, dem Betrachter zugewandte, Oberfläche ist durch Bogenstriche symbolisiert. Eine Alternative ist durch zwei Planplatten 5 mit senkrecht zueinander stehenden Kippachsen gegeben (um die x-Achse beziehungsweise um die y-Achse gegeben; nicht gezeigt).

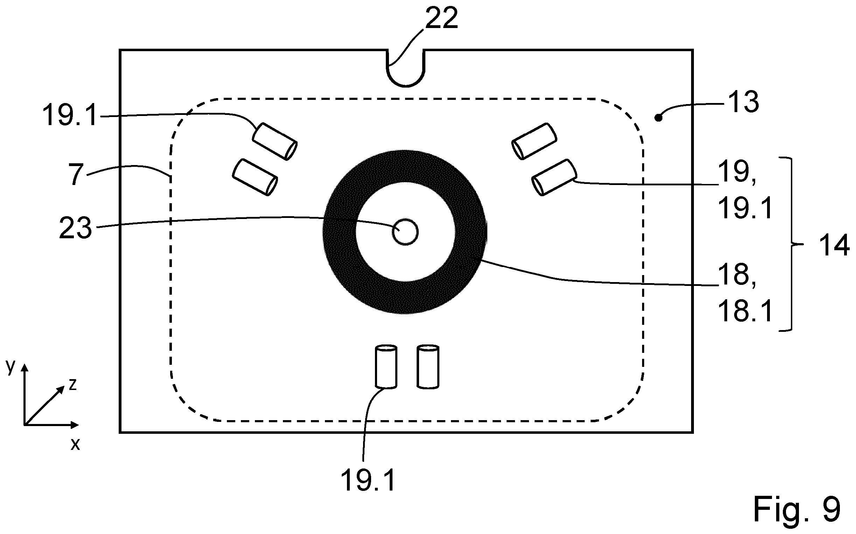

Zum Justieren der Strahllage wird die Linse 2 unter Nutzung externer Justagehilfsmittel (siehe Fig. 9) in allen Freiheitsgraden so auf den von der Faser 1 kommenden Strahl positioniert, dass ein kollimiertes Bündel am Ausgang 9 des Fasersteckers 7 gegenüber der Koppelfläche 13 (siehe Fig. 7 und 8) orts- und winkelgenau austritt. Die Ferrule 10 kann im Faserlager 11 mittels eines Klemmelements 20 lösbar arretiert sein. Durch die Lageeinstellung der Planplatte 5 erfolgt eine Optimierung der lateralen Ausrichtung beziehungsweise eine Optimierung der Zentrierung des Strahlengangs 6 zur optischen Achse 3.

Je nach Wellenlängenbereich der austretenden Laserstrahlung ist die als Kollimationslinse wirkende optische Linse 2 einfach, chromatisch oder achromatisch korrigiert ausgeführt. Der Langzeitstabilität der Transmission kurzwelliger Laserstrahlung bei 405 nm ist in der chromatischen und achromatischen Variante gegebenenfalls durch eine entsprechend stabile Kittschicht oder eine kittfreie Ausführung Rechnung zu tragen.

Die Wirkungsweise zweier zueinander verstellbarer Prismenkeile eines Prismenkeilpaars 12a ist in den Figuren 7a und 7b schematisch und beispielhaft gezeigt. In einer ersten Relativstellung stehen die Prismenkeile gegeneinander um 180° gedreht in einer Nullstellung. In dieser tritt ein Lichtstrahl (Pfeil) entlang der optischen Achse 3 beziehungsweise des Strahlengangs 6 durch das Prismenkeilpaar 12a. Der Lichtstrahl wird in der weiteren Relativstellung gemäß Fig. 7b unter einem definierten Winkel in der Zeichenebene nach unten abgelenkt.

In der Fig. 8a ist ein Schwenkkeilpaar 28 umfassend die Linsen 28.1 und 28.2 dargestellt. Die erste Linse 28.1 ist als eine plan-konkave Linse ausgebildet, während die zweite Linse 28.2 als eine plan-konvexe Linse gestaltet ist. Die planen Seitenflächen der Linsen 28.1 und 28.2 sind einander abgewandt, so dass die planen Seitenflächen nach außen zeigen und sich in der in Fig. 8a gezeigten Nullstellung des Schwenkkeilpaares 28 orthogonal zur optischen Achse 3 beziehungsweise zum Strahlengang 6 erstrecken. Die optische Wirkung des in Nullstellung befindlichen Schwenkeilpaares 28 besteht darin, dass ein senkrecht, insbesondere mittig, auf eine plane Seitenfläche auftreffender Lichtstrahl, ohne seitliche Ablenkung durch das Schwenkkeilpaar 28 durchtritt. Um die Auswirkung des Schwenkkeilpaares 28 auf den kollimierten Strahl weitgehend zu reduzieren, sind die Brennweiten der Linsen 28.1 und 28.2 groß und betragen beispielsweise 1 m.

Die konvexe und die konkave Seitenfläche sind hinsichtlich ihrer Dimensionen und Radien so aufeinander abgestimmt, dass diese relative zueinander lateral verschoben werden können. In der Fig. 8b ist die mit einer konvexen Seitenfläche versehene Linse 28.2 lateral gegen die erste Linse 28.1 verschoben. Der auftreffende Lichtstrahl erfährt eine Ablenkung von seiner ursprünglichen Ausbreitungsrichtung.

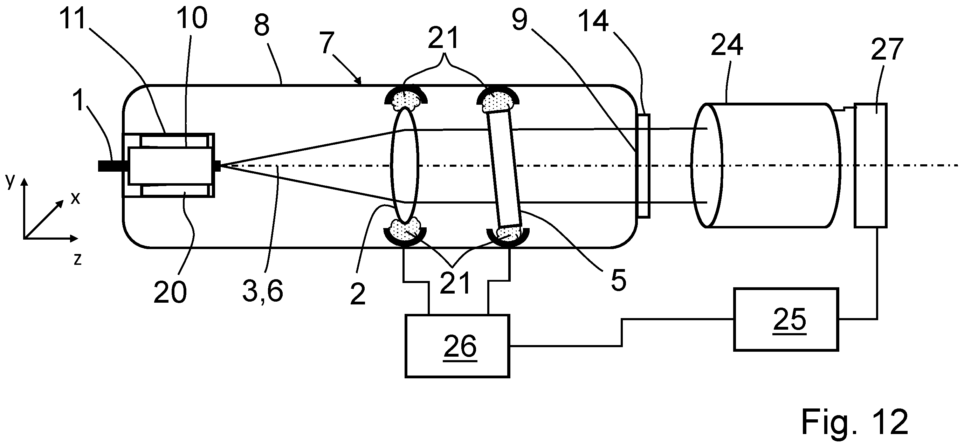

Die laterale Verschiebung einer oder beider Linsen 28.1, 28.2 des Schwenkkeilpaares 28 erfolgt beispielsweise mittels eines gesteuerten Antriebs (nicht gezeigt). Die zugehörigen Steuerbefehle können von einer Auswerteeinheit 25 generiert und durch eine Stellvorrichtung 26 umgesetzt werden (siehe zum Beispiel Fig. 12).

Das Schwenkkeilpaar 28 kann optional auch als Ganzes um die x-Achse und/oder um die y-Achse gekippt werden. Dabei kann die Relativstellung der Linsen 28.1 und 28.2 konstant gehalten werden, sodass beispielsweise die optische Wirkung einer Planplatte erzielt wird. Optional kann das Schwenkkeilpaar 29 entlang der z-Achse verschoben werden.

Eine Ausführung der Koppelfläche 13 des Fasersteckers 7 (durch eine unterbrochene Voll-Linie angedeutet) ist in Fig. 9 in einer Draufsicht in z-Richtung gezeigt. Die Verbindung einer erfindungsgemäßen optischen Steckverbindung ist durch die Wirkung einer magnetischen Kupplung 18 und einer kinematischen Kupplung 19 erreicht.

Auf der Koppelfläche 13 oder teilweise oder bündig in diese eingelassen ist ein Ringmagnet als eine erste Komponente 18.1 der magnetischen Kupplung 18 vorhanden. Dieser umfängt rotationssymmetrisch einen als Ausgang 9 des Fasersteckers 7 dienenden Durchgang 23. Um jeweils 120° zueinander versetzt sind erste Komponenten 19.1 der kinematischen Kupplung 19 vorhanden. Im Ausführungsbeispiel sind diese durch Paare zueinander paralleler und voneinander beabstandeter Stäbe gebildet. In weiteren Ausführungsmöglichkeiten können die Winkel zwischen den ersten Komponenten 19.1 und/oder deren Gestaltung anders gewählt sein.

Eine Aussparung 22 ermöglicht eine kraftfreie Verschraubung des Fasersteckers 7 als Sicherung gegen ein unbeabsichtigtes Unterbrechen der Steckverbindung.

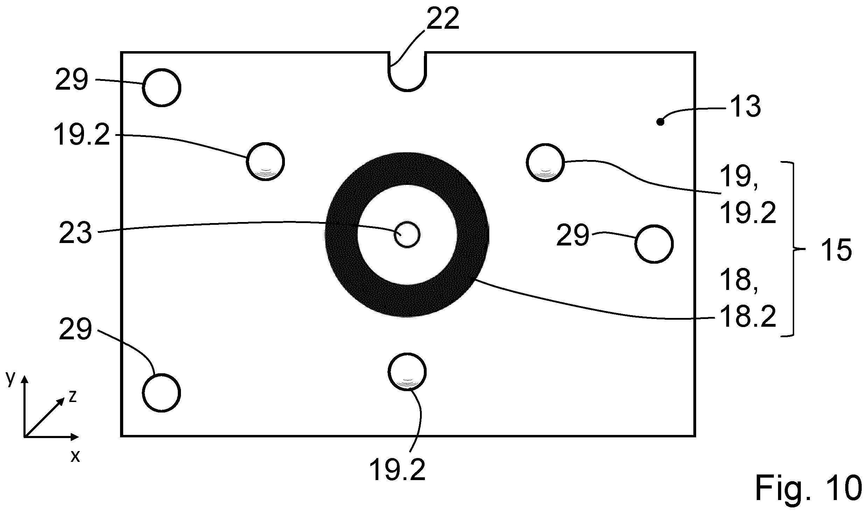

Eine zur Koppelstruktur 14 kompatible Aufnahmestruktur 15 der Steckeraufnahme 16 weist drei kugelförmig hervorstehende zweite Komponenten 19.2 der kinematischen Kupplung 19 auf (Fig. 10). Diese sind hinsichtlich ihrer Dimensionierung und Positionierung zu den ersten Komponenten 19.1 der kinematischen Kupplung 19 kompatibel. Symmetrisch um einen Durchgang 23 ist eine zweite Komponente 18.2 der magnetischen Kupplung 18 vorhanden, die hinsichtlich ihrer Magnetisierung der ersten Komponente 18.1 entgegengesetzt gepolt ist. Die zweite Komponente 18.2 ist in ihrer Dimensionierung und Positionierung zur ersten Komponente 18.1 kompatibel. Außerdem sind Befestigungsbohrungen 29 gezeigt.

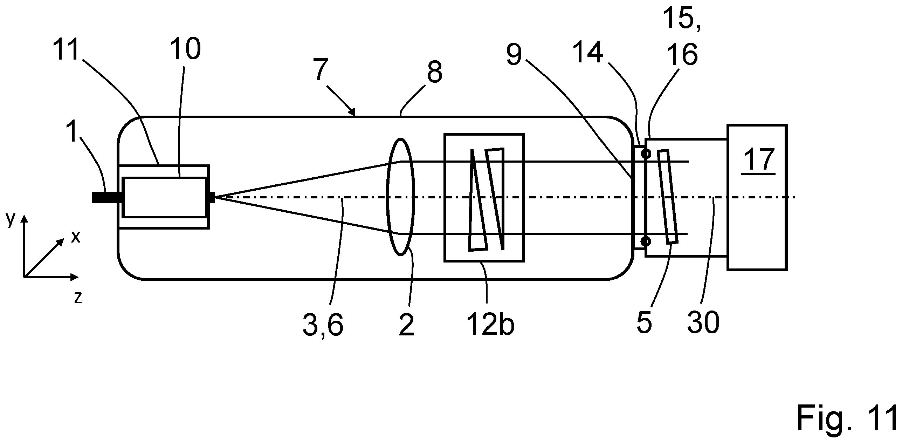

Die Steckeraufnahme 16 weist in ihrem Strahlengang 30 mindestens eine justierbare planparallele Platte 5 auf (Fig. 11). Die Justiermöglichkeit dieser Platte 5 erlaubt es, die einzuhaltenden Toleranzen der Strahllage des Fasersteckers 7 weiter zu fassen als dies bei den vorhergehenden Ausführungsbeispielen der Fall ist.

Das Verfahren zur Justierung eines Fasersteckers 7 ist schematisch in Fig. 12 anhand eines Fasersteckers 7 gemäß des fünften Ausführungsbeispiels der optischen Steckverbindung (Fig. 6) gezeigt. Für die Justierung ist die Faser 1 mit der Ferrule 10 in das Faserlager 11 eingelegt. In die Faser 1 wird Licht eingekoppelt, das an der im Faserstecker 7 befindlichen Stirnseite der Faser 1 austritt. Der Faserstecker 7 beziehungsweise dessen Strahlgang 6 wird auf eine Justiervorrichtung 24 ausgerichtet und diese wird mit dem aus dem Faserstecker 7 austretendem Licht beleuchtet. Die Justiervorrichtung 24 kann ein Autokollimationsfernrohr (AKF) sein, welches auf zwei unterschiedliche Fokuslagen eingestellt werden kann und so die Funktionen sowohl eines AKF zur Winkelmessung und als auch eines Fluchtfernrohrs zur Ortsbestimmung in sich vereint. Beispielsweise kann die Brennweite des AKF in einem Bereich von 400 mm liegen, um bei der Winkelmessung eine hohe Genauigkeit von kleiner gleich einer Winkelsekunde (≤ 1") zu erreichen.

Zum Zwecke der Justierung wird der Strahlengang 6 des Fasersteckers 7 mit der optischen Achse der Justiervorrichtung 24 in Überlagerung gebracht. Anschließend werden die verstellbaren optischen Elemente, in diesem Ausführungsbeispiel die optische Linse 2 und die Planplatte 5, so verstellt, dass das Licht am optischen Ausgang 9 kollimiert vorliegt und parallel und symmetrisch zum Strahlengang 6 aus dem Faserstecker 7 austritt. Gemessen wird die Winkel- und die Ortslage mit der Justiervorrichtung 24. Dies kann im Beispiel des AKF in zwei Messvorgängen erfolgen. Die erfassten Messdaten zur Ortslage beziehungsweise Winkellage können über einen mit der Justiervorrichtung 24 verbundenen Detektor 27, beispielsweise eine CCD Kamera, an eine Auswerteeinheit 25 übermittelt werden.

Erforderliche Justierungen der verstellbaren optischen Elemente, in diesem Ausführungsbeispiel die optische Linse 2 und die Planplatte 5, können angezeigt und daraufhin manuelle Einstellungen vorgenommen werden. Alternativ kann die Auswerteeinheit 25 derart konfiguriert sein, dass in Abhängigkeit der Messdaten Steuerbefehle generiert und an eine Stellvorrichtung 26 beziehungsweise an mehrere Stellvorrichtungen 26 übermittelt werden. Die verstellbaren optischen Elemente werden entsprechend der Steuerbefehle justiert. Dieser Vorgang kann iterativ erfolgen und im Sinne einer Feedback-Steuerung durchgeführt sein.

Liegen die erfassten Messdaten innerhalb zulässiger Toleranzen, wird der Justiervorgang beendet. Die verstellbaren optischen Elemente und optional auch die Ferrule 10, werden arretiert, indem diese beispielsweise verklebt, vergossen, verlötet oder verschweißt werden. Die Ferrule 10 kann auch mittels des Klemmelements 20 in ihrer Einbaulage gehalten sein. Diese Ausführung erlaubt eine Wiederverwendung der Faser 1 im Falle eines Defekts des Fasersteckers 7.

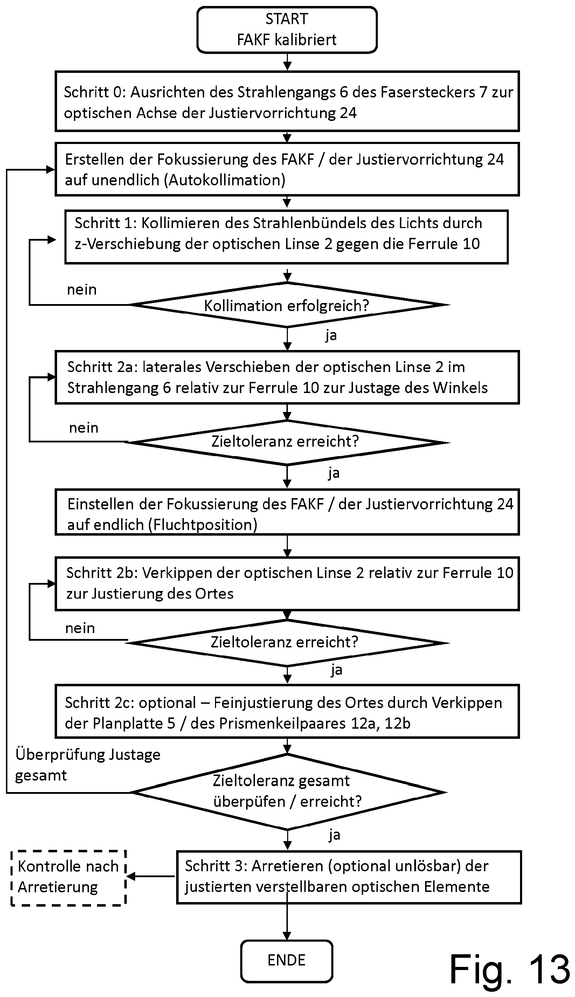

In einem Ablaufschema des erfindungsgemäßen Verfahrens erfolgt also ein Ausrichten des Fasersteckers 7 und dessen Strahlengangs 6 relativ zu einer Justiervorrichtung 24 (Fig. 13; Schritt 0). Die Justiervorrichtung 24 kann zwei Strahlengänge mit einer Referenzmarke für die Einstellung eines Winkels in dem einen Strahlengang und einer Referenzmarke zur Einstellung eines Orts in dem anderen Strahlengang aufweisen. In dem nachfolgend erläuterten Ausgestaltungsbeispiel des erfindungsgemäßen Justierverfahrens wird auf eine alternative Möglichkeit in Form eines FAKF Bezug genommen. Das FAKF wird zum Zwecke der Justierung des Winkels beziehungsweise des Orts jeweils entsprechend neu fokussiert.

Die Fokussierung des FAKF beziehungsweise der Justiervorrichtung 24 wird auf unendlich eingestellt Dies entspricht dem Funktionsprinzip eines Autokollimationsfernrohrs.

In einem Schritt 1 des Verfahrens wird divergent in einem Strahlenbündel aus der Faser 1 austretendes Licht möglichst symmetrisch zum Strahlengang 6 des Fasersteckers 7 ausgerichtet. Der Strahlengang 6 des Fasersteckers 7 wird zur optischen Achse der Justiervorrichtung 24 ausgerichtet, so dass Strahlengang 6 und optische Achse der Justiervorrichtung 24 zusammenfallen.

Anschließend wird die optische Linse 2 zu dem Strahlenbündel positioniert. Durch Verschieben von optischer Linse 2 und/oder Ferrule 10 relativ zueinander in Strahlrichtung (z-Richtung) wird das Strahlenbündel durch Wirkung der optischen Linse 2 kollimiert. Der Erfolg der Kollimation wird überprüft. Schritt 1 wird wiederholt, wenn die Kollimation nicht erfolgreich war.

Bei erfolgreicher Kollimation wird in einem Schritt 2a durch ein seitliches Verschieben der optischen Linse 2 relativ zur Ferrule 10 der Winkel des Strahlenbündels eingestellt (siehe auch Fig. la). Dabei können die jeweiligen Veränderungen des gemessenen Winkels mit einer aktuellen Lageänderung der optischen Linse 2 in Bezug gesetzt werden und die Einstellung iterativ vorgenommen werden. Solange eine vorgegebene Zieltoleranz nicht erreicht ist, wird der Schritt 2a wiederholt.

Ist dagegen die Zieltoleranz erreicht, wird die Fokussierung des FAKF beziehungsweise der Justiervorrichtung 24 auf endlich eingestellt (Fluchtposition).

Ist die Einstellung des Winkels insoweit abgeschlossen, wird in einem Schritt 2b die optische Linse 2 relativ zur Ferrule 10 verkippt, um die gewünschte Ortslage des kollimierten Strahlenbündels einzustellen (siehe auch Fig. 1b). Diese Justierung des Ortes ist vergleichsweise grob. Befindet sich neben der optischen Linse 2 auch eine Planplatte 5 oder ein Prismenkeilpaar 12a, 12b im Strahlengang 6, kann durch ein Verkippen dieser eine Feinjustierung des Ortes vorgenommen werden. Wie oben zur Winkeljustierung ausgeführt, kann auch die Justierung des Ortes iterativ erfolgen, das heißt, es wird das Erreichen einer Zieltoleranz geprüft. Je nach Ergebnis der Prüfung wird Schritt 2b wiederholt oder mit Schritt 2c fortgefahren.

Der Schritt 2c ist optional und beinhaltet eine Feinjustierung des Ortes. Dazu wird die Planplatte 5, das Schwenkkeilpaar 28 beziehungsweise das Prismenkeilpaar 12a, 12b verkippt.

Um das Ergebnis der bisherigen Justageschritte zu bewerten, wird wiederum das Erreichen einer vorab festgelegten Zieltoleranz geprüft. Bei Nichterreichen der Zieltoleranz wird der Justagevorgang beginnend mit der Einstellung der Fokussierung des FAKF / der Justiervorrichtung 24 auf Unendlich (Autokollimation, zwischen Schritt 0 und Schritt 1) wiederholt.

Ist die Zieltoleranz des gesamten Justagevorgangs erreicht, wird mit Schritt 3 fortgefahren. In dem Schritt 3 werden die verstellbaren optischen Elemente in dem derart justierten Zustand arretiert. Die Arretierung kann entweder lösbar oder unlösbar erfolgen. Ein derart justierter Faserstecker 7 kann einmalig oder wiederholt mit unterschiedlichen Steckeraufnahmen 16 verbunden werden. Dabei bleibt die korrekte Ausrichtung des am Ausgang 9 des Fasersteckers 7 bereitgestellten und beispielsweise in ein Mikroskop eingestrahlten Strahlenbündel des Lichts erhalten. Vorteilhaft wird eine Kontrolle der Justage im nunmehr arretierten Zustand des Fasersteckers 7 durchgeführt.

### Bezugszeichen

- 1: Faser
- 2: optische Linse
- 3: optische Achse (der optischen Linse)
- 4: Prismenkeil
- 5: Planplatte
- 6: Strahlengang (des Fasersteckers 7)
- 7: Faserstecker
- 8: Steckergehäuse
- 9: Ausgang (Strahlengang 6)
- 10: Ferrule
- 11: Faserlager
- 12a: Prismenkeilpaar
- 12b: Prismenkeilpaar in einer gemeinsamen Fassung
- 13: Koppelfläche
- 14: Koppelstruktur
- 15: Aufnahmestruktur
- 16: Steckeraufnahme
- 17: Schnittstelle
- 17.1: Mikroskop
- 18: magnetische Kupplung
- 18.1: erste Komponente
- 18.2: zweite Komponente
- 19: kinematische Kupplung
- 19.1: erste Komponente
- 19.2: zweite Komponente
- 20: Klemmelement
- 21: unlösbare Arretierung
- 22: Aussparung (für kraftfreie Verschraubung)
- 23: Durchgang
- 24: Justiervorrichtung
- 25: Auswerteeinheit
- 26: Stellvorrichtung
- 27: Detektor
- 28: Schwenkkeilpaar
- 28.1: erste Linse
- 28.2: zweite Linse
- 29: Befestigungsbohrungen
- 30: Strahlengang (der Steckeraufnahme 16)

## Patentansprüche

1. Faserstecker (7) zur optischen Kupplung einer lichtleitenden Faser (1) mit einer
Steckeraufnahme (16),
umfassend
- ein Steckergehäuse (8) zur Aufnahme und Arretierung von Bauteilen des Fasersteckers (7) in einer vorbestimmten Relativlage zueinander; wobei das Steckergehäuse (8)
- einen Fasereingang und ein Faserlager (11) zur ortsfesten Aufnahme der lichtleitenden Faser (1);
- dem Faserlager (11) entlang eines Strahlengangs (6) optisch nachgelagert mindestens eine optische Linse (2) zum Sammeln von aus einer Stirnfläche der lichtleitenden Faser (1) austretenden Lichts und zum Kollimieren des gesammelten Lichts; sowie
- eine Koppelfläche (13) mit einem Ausgang (9) des Strahlengangs (6) und mit einer Koppelstruktur (14) zur Verbindung mit einer zur Koppelstruktur (14) komplementären Aufnahmestruktur (15) der Steckeraufnahme (16),
aufweist,
wobei
- dem Faserlager (11) optisch nachgelagert neben der mindestens einen optischen Linse (2) mindestens ein verstellbares optisches Element im Strahlengang (6) angeordnet ist; und
- die Koppelstruktur (14) eine erste Komponente (18.1) einer aus zwei Komponenten bestehenden magnetischen Kupplung (18) und eine erste Komponente (19.1) einer kinematischen Kupplung (19) aufweist.

2. Faserstecker (7) nach Anspruch 1, **dadurch gekennzeichnet, dass** als verstellbares optisches Element ein Prismenkeilpaar (12b) mit zwei gegeneinander verstellbaren Prismenkeilen in einer gemeinsamen Fassung angeordnet ist und das gemeinsam gefasste Prismenkeilpaar (12b) um mehrere Achsen kippbar ist.

3. Faserstecker (7) nach Anspruch 1, **dadurch gekennzeichnet, dass** als verstellbares optisches Element ein Schwenkkeilpaar (28) vorhanden ist, welches zwei Linsen (28.1, 28.2) umfasst, deren voneinander abgewandten Seitenflächen als Planflächen ausgebildet sind und wobei die Linsen (28.1, 28.2) relativ zueinander geneigt und/oder lateral verschoben werden können.

4. Faserstecker (7) nach Anspruch 1, 2 oder 3, **dadurch gekennzeichnet, dass** die optische Linse (2), die Linsen (28.1, 28.2) des Schwenkkeilpaars (28) beziehungsweise vorhandene Prismenkeile des Prismenkeilpaars (12b) auf den zur Verwendung vorgesehenen Spektralbereich beziehungsweise Wellenlängenbereich achromatisch korrigiert sind.

5. Faserstecker (7) nach Anspruch 1, **dadurch gekennzeichnet, dass** als verstellbares optisches Element wenigstens eine planparallele Platte (5) angeordnet ist.

6. Faserstecker (7) nach Anspruch 5, **dadurch gekennzeichnet, dass** eine weitere planparallele Platte (5) und/oder ein Paar gegeneinander verstellbarer Prismenkeile (12a) im Strahlengang (6) angeordnet ist beziehungsweise angeordnet sind.

7. Faserstecker (7) nach einem der vorhergehenden Ansprüche, **dadurch gekennzeichnet, dass** in dem Faserlager (11) eine lichtleitende Faser (1) gehalten ist, wobei eine Lichtaustrittsfläche der Faser (1) entlang des Strahlengangs (6) gerichtet ist.

8. Faserstecker (7) nach einem der vorhergehenden Ansprüche, **dadurch gekennzeichnet, dass** im Faserlager (11) ein Klemmelement (20) vorhanden ist, mittels dem eine in das Faserlager (11) aufgenommene Faser (1) gehalten werden kann beziehungsweise gehalten ist.

9. Faserstecker (7) nach Anspruch 7 oder 8, **dadurch gekennzeichnet, dass** die verstellbaren optischen Elemente so justiert sind, dass ein aus der Faser (1) austretendes Licht parallel und symmetrisch zum Strahlengang (6) am Ausgang (9) des Fasersteckers (7) bereitgestellt ist beziehungsweise bereitgestellt werden kann; und die verstellbaren optischen Elemente in dem derart justierten Zustand arretiert sind.

10. Optische Steckverbindung umfassend einen Faserstecker (7) nach einem der Ansprüche 1 bis 9 und eine Steckeraufnahme (16), wobei die Steckeraufnahme (16)
- eine zu der am Faserstecker (7) befindlichen ersten Komponente (19.1) der kinematischen Kupplung (19) komplementär gestaltete zweite Komponente (19.2) der kinematischen Kupplung (19) als Aufnahmestruktur (15); und
- eine zweite Komponente (18.2) der aus zwei Komponenten bestehenden magnetischen Kupplung (18)
aufweist.

11. Verfahren zur Justierung eines Fasersteckers (7) nach einem der Ansprüche 7 und 8, umfassend die Schritte
- des Ausrichtens des Fasersteckers (7) und dessen Strahlengangs (6) relativ zu einer Justiervorrichtung (24);
- Beleuchten der Justiervorrichtung (24) mit Licht des Fasersteckers (7) und Justieren der verstellbaren optischen Elemente, bis ein aus der Faser (1) austretendes Licht parallel und symmetrisch zum Strahlengang (6) am Ausgang (9) bereitgestellt ist; und
- Arretieren der verstellbaren optischen Elemente in dem derart justierten Zustand.

## Claims

1. Fibre plug (7) for the optical coupling of a light-guiding fibre (1) with a plug receptacle (16), comprising
- a plug housing (8) for receiving and locking component parts of the fibre plug (7) in a predetermined position relative to one another; wherein the plug housing (8) has
- a fibre inlet and a fibre bearing (11) for the spatially fixed reception of the light-guiding fibre (1);
- optically downstream of the fibre bearing (11) along a beam path (6), at least one optical lens (2) for collecting light exiting at an end face of the light-guiding fibre (1) and for collimating the collected light; and
- a coupling surface (13) with an output (9) of the beam path (6) and with a coupling structure (14) for connection to a receptacle structure (15) of the plug receptacle (16), said receptacle structure being complementary to the coupling structure (14),
wherein
- besides the at least one optical lens (2) at least one adjustable optical element is arranged optically downstream of the fibre bearing (11) in the beam path (6); and
- the coupling structure (14) has a first component (18.1) of a magnetic coupling (18) consisting of two components and a first component (19.1) of a kinematic coupling (19).

2. Fibre plug (7) according to Claim 1, **characterized in that** a prism wedge pair (12b) with two mutually adjustable prism wedges is arranged in a common mount as the adjustable optical element and the jointly held prism wedge pair (12b) is tiltable about a plurality of axes.

3. Fibre plug (7) according to Claim 1, **characterized in that** a pivot wedge pair (28) is provided as the adjustable optical element, which comprises two lenses (28.1, 28.2) whose side surfaces facing away from one another are designed as planar surfaces and wherein the lenses (28.1, 28.2) can be inclined relative to one another and/or displaced laterally.

4. Fibre plug (7) according to Claim 1, 2 or 3, **characterized in that** the optical lens (2), the lenses (28.1, 28.2) of the pivot wedge pair (28) or existing prism wedges of the prism wedge pair (12b) are corrected achromatically to the spectral range or wavelength range intended for use.

5. Fibre plug (7) according to Claim 1, **characterized in that** at least one plane-parallel plate (5) is arranged as the adjustable optical element.

6. Fibre plug (7) according to Claim 5, **characterized in that** a further plane-parallel plate (5) and/or a pair of mutually adjustable prism wedges (12a) is or are arranged in the beam path (6).

7. Fibre plug (7) according to one of the preceding claims, **characterized in that** a light-guiding fibre (1) is retained in the fibre bearing (11), wherein a light exit surface of the fibre (1) is directed along the beam path (6).

8. Fibre plug (7) according to one of the preceding claims, **characterized in that** a clamping element (20), by means of which a fibre (1) received in the fibre bearing (11) can be or is retained, is present in the fibre bearing (11).

9. Fibre plug (7) according to Claim 7 or 8, **characterized in that** the adjustable optical elements are adjusted such that light exiting the fibre (1) is provided or can be provided at the output (9) of the fibre plug (7) parallel and symmetrically with respect to the beam path (6); and the adjustable optical elements are locked in the state adjusted in this way.

10. Optical plug connection comprising a fibre plug (7) according to one of Claims 1 to 9 and a plug receptacle (16), wherein the plug receptacle (16) has
- a second component (19.2) of the kinematic coupling (19), which is designed to be complementary to the first component (19.1) - situated on the fibre plug (7) - of the kinematic coupling (19), as a receptacle structure (15); and
- a second component (18.2) of the magnetic coupling (18) consisting of two components.

11. Method for adjusting a fibre plug (7) according to one of Claims 7 and 8, comprising the steps of
- aligning the fibre plug (7) and its beam path (6) relative to an adjustment apparatus (24);
- illuminating the adjustment apparatus (24) with light from the fibre plug (7) and adjusting the adjustable optical elements until light exiting the fibre (1) is provided at the output (9) parallel and symmetrically with respect to the beam path (6); and
- locking the adjustable optical elements in the state adjusted in this way.

## Revendications

1. Connecteur de fibre (7) pour le couplage optique d'une fibre optique (1) avec un logement de connecteur (16),
comprenant
- un boîtier de connecteur (8) pour la réception et le blocage de composants du connecteur de fibre (7) dans une position relative prédéterminée les uns par rapport aux autres ; le boîtier de connecteur (8) comportant
- une entrée de fibre et un logement de fibre (11) pour la réception en position fixe de la fibre optique (1) ;
- en aval du logement de fibre (11) sur un chemin de faisceau (6), au moins une lentille optique (2) pour collecter la lumière sortant d'une face frontale de la fibre optique (1) et pour collimater la lumière collectée ; ainsi que
- une surface de couplage (13) présentant une sortie (9) du chemin de faisceau (6) et une structure de couplage (14) pour la connexion à une structure de logement (15) complémentaire de la structure de couplage (14) du logement de connecteur (16),
aufweist,
dans lequel
- au moins un élément optique réglable est disposé optiquement en aval du logement de fibre (11) sur le chemin de faisceau (6) en plus de ladite au moins une lentille optique (2) ; et
- la structure de couplage (14) présente un premier composant (18.1) d'un couplage magnétique (18) à deux composants et un premier composant (19.1) d'un couplage cinématique (19).

2. Connecteur de fibre (7) selon la revendication 1, **caractérisé en ce qu'**en tant qu'élément optique réglable, une paire de coins de prisme (12b) présentant deux coins de prisme réglables les uns par rapport aux autres est disposée dans une monture commune, et la paire de coins de prisme à monture commune (12b) peut être inclinée autour de plusieurs axes.

3. Connecteur de fibre (7) selon la revendication 1, **caractérisé en ce qu'**en tant qu'élément optique réglable, il est prévu une paire de coins pivotants (28), laquelle comprend deux lentilles (28.1, 28.2) dont les faces latérales opposées l'une à l'autre sont réalisées sous forme de surfaces planes, les lentilles (28.1, 28.2) pouvant être inclinées et/ou déplacées latéralement les unes par rapport aux autres.

4. Connecteur de fibre (7) selon la revendication 1, 2 ou 3, **caractérisé en ce que** la lentille optique (2), les lentilles (28.1, 28.2) de la paire de coins pivotants (28) ou les coins de prisme présents de la paire de coins de prisme (12b) sont corrigés de manière achromatique pour le domaine spectral ou le domaine de longueurs d'onde prévu pour l'utilisation.

5. Connecteur de fibre (7) selon la revendication 1, **caractérisé en ce qu'**en tant qu'élément optique réglable, au moins une lame à faces parallèles (5) est mise en place.

6. Connecteur de fibre (7) selon la revendication 5, **caractérisé en ce qu'**une autre lame à faces parallèles (5) et/ou une paire de coins de prisme réglables l'un par rapport à l'autre (12a) sont disposés sur le chemin de faisceau (6).

7. Connecteur de fibre (7) selon l'une des revendications précédentes, **caractérisé en ce qu'**une fibre optique (1) est maintenue dans le logement de fibre (11), une surface de sortie de lumière de la fibre (1) étant dirigée le long du chemin de faisceau (6).

8. Connecteur de fibre (7) selon l'une des revendications précédentes, **caractérisé en ce qu'**il est prévu dans le logement de fibre (11) un élément de serrage (20) au moyen duquel une fibre (1) reçue dans le logement de fibre (11) peut être maintenue ou est maintenue.

9. Connecteur de fibre (7) selon la revendication 7 ou 8, **caractérisé en ce que** les éléments optiques réglables sont ajustés de telle manière que la lumière sortant de la fibre (1) est fournie ou peut fournie de manière parallèle et symétrique par rapport au chemin de faisceau (6) à la sortie (9) du connecteur de fibre (7) ; et les éléments optiques réglables sont bloqués dans cet état d'ajustement.

10. Connexion optique enfichable comprenant un connecteur de fibre (7) selon l'une des revendications 1 à 9 et un logement de connecteur (16), le logement de connecteur (16) comportant
- un deuxième composant (19.2) du couplage cinématique (19) conçu de manière complémentaire du premier composant (19.1) du couplage cinématique (19) situé sur le connecteur de fibre (7), en tant que structure de logement (15) ; et
- un deuxième composant (18.2) du couplage magnétique (18) à deux composants.
aufweist.

11. Procédé d'ajustement d'un connecteur de fibre (7) selon l'une des revendications 7 et 8, comprenant les étapes suivantes :
- l'alignement du connecteur de fibre (7) et de son chemin de faisceau (6) par rapport à un dispositif d'ajustement (24) ;
- l'éclairage du dispositif d'ajustement (24) avec la lumière provenant du connecteur de fibre (7) et l'ajustement des éléments optiques réglables jusqu'à ce qu'une lumière sortant de la fibre (1) soit fournie de manière parallèle et symétrique par rapport au chemin de faisceau (6) sur la sortie (9) ; et
- le blocage des éléments optiques réglables dans cet état d'ajustement.
